# FASCICULE DE BREVET EUROPEEN

(11) **EP 2 684 799 B1**
(45) Date de publication et mention de la délivrance du brevet: **14.01.2015**
(21) Numéro de dépôt: 13003215.4
(22) Date de dépôt: 24.06.2013
(51) Int. Cl.: B64C 27/51

(54) **Rotor de giravion équipé d'amortisseurs de traînée logés dans des manchons de liaison de pales à un moyeu du rotor**
Rotor eines Drehflügelflugzeugs, der mit Luftwiderstandsdämpfern ausgestattet ist, die sich in den Verbindungsmuffen der einnabigen Rotorblätter befinden
Rotorcraft rotor with drag dampers housed in connecting sleeves of blades to a hub of the rotor

(30) Priorité: 12.07.2012 FR 1201986
(43) Date de publication de la demande: 15.01.2014
(73) Titulaire: Airbus Helicopters, 13725 Marignane Cedex (FR)
(72) Inventeur: Amari, André, 60520 La Chapelle En Serval (FR); Gaffiero, Jacques, 75017 Paris (FR)
(74) Mandataire: GPI & Associés

(56) Documents cités:
- EP-A1- 2 223 854
- FR-A1- 2 943 621

## Description

La présente invention est du domaine des rotors de giravions, et relève plus particulièrement des dispositifs d'amortissement des mouvements de pales équipant de tels rotors.

La présente invention a pour objet un dispositif d'amortissement des oscillations en traînée des pales d'un rotor de giravion. La présente invention porte plus spécifiquement sur les modalités de montage sur un moyeu du rotor, d'un amortisseur que comprend un tel dispositif d'amortissement.

Les giravions sont des aéronefs à voilure tournante, parmi lesquels sont classifiés les hélicoptères. Un hélicoptère comporte notamment au moins un rotor principal à axe sensiblement vertical, procurant la sustentation, la propulsion et le guidage du giravion en vol. L'hélicoptère comporte aussi couramment un rotor arrière pour son guidage en lacet, voire encore une hélice propulsive dans le cadre d'un hélicoptère à grandes vitesses et à longue portée, communément désigné par hélicoptère hybride.

Un rotor de giravion comporte un moyeu tournant entraîné en rotation par une source motrice du giravion, sur lequel moyeu sont montées des pales pour leur entraînement en rotation par le moyeu. Les pales sont montées mobiles sur le moyeu en pivotement sur elles-mêmes dans leur plan général d'extension, pour permettre de faire varier leur pas au moins collectivement, tel que pour un rotor arrière ou une hélice propulsive, sinon aussi cycliquement pour un rotor principal notamment. Une variation de pas collectif ou cyclique des pales d'un rotor permet de modifier le comportement en vol du giravion.

Il est courant de monter les pales sur le moyeu par l'intermédiaire d'organes de liaison, tel qu'agencés en bras, en manchon ou autre organe analogue de montage d'une pale sur le moyeu. Un tel organe de liaison, désigné ci-après par manchon, est interposé entre le pied d'une pale et le moyeu. Pour autoriser les dites variations de pas des pales, les manchons sont articulés sur le moyeu, tel que par exemple au moyen d'un organe de butée sphérique, et sont manoeuvrables en pivotement par une tringle de commande de variation du pas des pales.

Les pales étant entraînées en rotation par le moyeu et étant mobiles dans leur plan général pour faire varier leur pas, leur comportement individuel est réputé complexe, particulièrement pour les pales du rotor principal.

En effet, il est à considérer que les pales sont soumises en rotation à des efforts qui varient sur leur longueur. En situation de vol stationnaire ou d'avancement du giravion, la répartition des efforts aérodynamiques le long d'une pale engendre une répartition de moment de flexion, dont la valeur est très importante en pied de pale. En progression du giravion en translation, la pale « avançante » a une incidence (ou pas) plus faible que la pale « reculante » dont le pas est augmenté afin d'équilibrer les portances.

Il a donc été proposé d'articuler les pales sur le moyeu en battement vertical autour d'un axe de battement orienté orthogonalement à l'axe de rotation du moyeu. Lors de la mise en rotation de la voilure tournante, la composition de la force centrifuge et des efforts de portance induit un basculement des pales en battement vertical, conférant à la voilure tournante une certaine conicité, le plan de rotation des pales pouvant être différent du plan orthogonal à l'axe de rotation du moyeu. Il est aussi à prendre en compte dans le montage de la pale sur le moyeu, une faculté d'escamotage de la pale en position de repli de la voilure tournante.

Dans ce contexte, il est encore à considérer que les pales sont en outre articulées en traînée sur le moyeu dans leur plan de rotation, autour d'un axe de traînée orienté sensiblement parallèlement à l'axe de rotation du moyeu. Une telle articulation des pales en traînée permet d'éviter la génération de moments de flexion des pales dans leur plan.

Cependant, les oscillations individuelles des pales autour de leur axe de traînée sont à l'origine d'un phénomène connu de résonnance au sol du giravion. Un tel phénomène est réputé potentiellement dangereux lorsque la fréquence propre d'oscillation des pales autour de l'axe de traînée est proche d'une fréquence propre de l'appareil au sol. Un tel problème est notamment posé pour le rotor principal, mais doit aussi être pris en compte pour d'autres voilures tournantes équipant l'hélicoptère, telles que pour le rotor arrière pour lequel il doit être pris en considération les modes propres d'oscillation d'une poutre de queue porteuse du rotor arrière.

Pour remédier à ce problème, il est connu d'équiper les rotors d'un dispositif d'amortissement des oscillations en traînée des pales autour de leur axe de traînée. Il a notamment été développé divers dispositifs d'amortissement, mettant en oeuvre des amortisseurs à déformation élastique. Chaque amortisseur est en prise articulée sur un organe de prise au moyeu par l'intermédiaire d'un embiellage, et sur une pale affectée à cet amortisseur. L'embiellage comprend notamment une ou plusieurs bielles, ou autres éléments analogues de transmission mécanique d'efforts.

Il est notamment exploité une faculté de déformation élastique de l'amortisseur entre deux points de fixation, pour amortir les oscillations en traînée d'au moins une pale qui lui est affectée. L'amortisseur est placé sous contraintes en déformation élastique entre lesdits points de fixation. L'un des points de fixation de l'amortisseur, considéré comme distal, est ancré par l'intermédiaire de l'embiellage sur un organe de prise au moyeu. L'autre des dits points de fixation de l'amortisseur, considéré comme proximal, est en prise sur une dite pale qui lui est affectée.

Selon diverses architectures possibles, l'organe de prise de l'amortisseur au moyeu est ménagé sur une pale voisine ou est incorporé au moyeu. La prise de l'amortisseur à son point de fixation proximal sur une dite pale qui lui est affectée, est potentiellement réalisée sur le manchon porteur de cette pale. Toujours selon diverses configurations possibles plus ou moins complexes visant à procurer des sollicitations de l'amortisseur adaptées aux besoins, le point de fixation distal de l'amortisseur, voire aussi son point de fixation proximal, sont en prise articulée sur une bielle. Une telle bielle est elle-même potentiellement articulée sur d'autres bielles articulées entre elles et/ou sur le moyeu et/ou encore sur le manchon d'une pale.

Les amortisseurs utilisés sont susceptibles d'être diversement agencés. Par exemple, les amortisseurs sont de conformation allongée et travaillent en traction/compression, ou sont de conformation cylindrique et travaillent en torsion. Un amortisseur de conformation cylindrique présente l'avantage d'être d'un agencement ramassé et peu encombrant, et finalement présente l'avantage d'être facilement implantable sur un manchon exploité pour la jonction de la pale au moyeu.

Il a par exemple été proposé par le document FR 2 943 621 (EUROCOPTER SAS), de loger un amortisseur de traînée de conformation cylindrique à l'intérieur d'un dit manchon. Le point de fixation proximal de l'amortisseur est fixé au manchon, son point de fixation distal étant relié par l'intermédiaire d'une bielle à un dit organe de prise incorporé au moyeu.

On pourra par exemple encore se reporter aux documents FR 2 653 405 (AEROSPACIALE SOCIETE NATIONALE INDUSTRIELLE SA), FR 2 733 961 (EUROCOPTER FRANCE SA) et EP 2 223 854 (AGUSTA SPA), ces documents étant relatifs à l'implantation sur un rotor d'amortisseurs selon diverses configurations plus ou moins complexes.

Il est apparu qu'une implantation des amortisseurs à l'intérieur des manchons, telle que divulguée par le document FR 2 943 621 (EUROCOPTER SAS), procurait divers autres avantages. Les amortisseurs implantés à l'extérieur des manchons sont générateurs de traînées aérodynamiques qu'il est souhaitable d'éviter. En outre, une implantation des amortisseurs à l'intérieur des manchons permet de les préserver de l'environnement hostile du rotor.

Cependant, il est aussi apparu qu'une implantation des amortisseurs à l'intérieur des manchons est facilitée dans le cas d'un amortisseur de conformation cylindrique. En effet, un tel amortisseur peut être facilement ancré à l'intérieur du manchon et être mis en prise articulée sur le moyeu par l'intermédiaire d'une dite bielle. Une telle implantation est plus délicate à réaliser pour un amortisseur de quelconque agencement.

Il est ainsi constaté que la solution proposée par le document FR 2 943 621 (EUROCOPTER SAS) est applicable pour un giravion de structure donnée et en fonction de besoins spécifiques d'amortissement des oscillations en traînée des pales. L'exploitation de cette solution pour de quelconques giravions de diverses structures est difficilement transposable, voire inadaptée.

En effet tel que précédemment mentionné, les besoins d'amortissement des oscillations en traînée des pales sont étroitement liés aux dits phénomènes de résonnance, et donc à la puissance et à la structure propre du giravion. Il est opportun que l'implantation de l'amortisseur dans le manchon ne fasse pas obstacle à une optimisation des configurations possibles d'implantation sur le rotor des autres organes que comprend le dispositif d'amortissement. Il serait avantageux que diverses architectures de l'embiellage adaptées à des besoins spécifiques d'amortissement des oscillations des pales en traînée soient rendues possibles sans modification structurelle majeure du dispositif d'amortissement.

Il est ainsi à considérer que l'un des buts de la présente invention est de procurer une liberté d'agencement du dispositif d'amortissement en fonction des besoins spécifiques d'un rotor, à partir d'une adaptation aisée de l'organisation générale d'un dispositif d'amortissement fondamental aisément modulable.

Il est aussi recherché par la présente invention de bénéficier préférentiellement des avantages que procure une implantation des amortisseurs à l'intérieur des manchons ou organes de liaison analogues aptes à protéger les amortisseurs de l'environnement extérieur. Un choix de la présente invention est de limiter les traînées aérodynamiques générées par le dispositif d'amortissement, et de préserver au mieux les amortisseurs de l'environnement hostile du rotor.

A partir de ce choix, il est aussi recherché par la présente invention de proposer un dispositif d'amortissement des oscillations en traînée des pales, qui soit exploitable par adaptation simple et sans modification structurelle majeure pour de quelconques giravions, quels que soient leur structure propre et les besoins spécifiques d'amortissement des oscillations en traînée des pales du ou des rotors dont ces quelconques giravions sont équipés.

Dans ce contexte, l'objet de la présente invention est de proposer un rotor de giravion équipé d'un dispositif d'amortissement des oscillations en traînée des pales de ce rotor, et un giravion équipé d'un tel rotor.

Il est plus particulièrement visé par la présente invention de proposer un tel rotor, dans lequel le dispositif d'amortissement comporte des amortisseurs logés dans des manchons procurant une liaison entre des pales et un moyeu du rotor, en prenant en compte l'ensemble des avantages potentiels à bénéficier, et les contraintes et/ou difficultés à surmonter qui ont été énoncés.

Le rotor de giravion de la présente invention est équipé d'un dispositif d'amortissement des oscillations en traînée des pales du rotor. Les pales sont individuellement montées articulées sur un moyeu tournant du rotor par l'intermédiaire de manchons respectifs. Les manchons sont chacun articulés sur le moyeu, au moins autour d'un axe de traînée orienté sensiblement parallèlement à l'axe de rotation du moyeu.

Le dispositif d'amortissement comprend un jeu d'amortisseurs, chacun individuellement logés dans un dit manchon. Il est à considérer que les manchons sont des organes de liaison entre la pale et le moyeu, sans préjuger de l'agencement spécifique d'un tel manchon. La qualification de manchon d'un tel organe de liaison ne doit pas être appréhendée au sens strict du terme selon une approche générale de la présente invention, dès lors que l'organe de liaison formé par un dit manchon est principalement apte à procurer le montage en mobilité de la pale au moyeu. Un tel organe de liaison ménage subsidiairement un logement avantageux de réception d'un dit amortisseur, permettant de le protéger de l'environnement hostile du rotor et de limiter les traînées aérodynamiques générées par le dispositif d'amortissement.

Un choix est cependant préférentiellement porté sur un organe de liaison structurellement agencé en organe évidé tel qu'un manchon ou analogue. Un tel manchon ménage avantageusement dans son évidement intérieur une chambre axiale apte à recevoir divers organes fonctionnels. De tels organes fonctionnels sont potentiellement liés à la mobilité de la pale sur le moyeu, tel que par exemple un organe à butée sphérique interposé entre le manchon et le moyeu.

Dans le cadre de la présente invention, une dite chambre axiale d'un manchon est avantageusement apte à loger un dit amortisseur sans avoir à doter l'organe de liaison d'un logement spécifique de réception de l'amortisseur. Il doit néanmoins être compris que l'amortisseur est susceptible d'être logé dans un quelconque logement du manchon ou de tout autre organe de liaison analogue entre la pale et le moyeu comportant un tel logement apte à recevoir un dit amortisseur, en vue de limiter les traînées aérodynamiques que l'amortisseur est susceptibles de générer, et de le protéger de l'environnement extérieur, notamment du milieu hostile que forme un rotor. Par exemple dans le cas d'une utilisation d'un bras de liaison entre la pale et le moyeu, un tel bras de liaison est susceptible de comporter un carter ou paroi analogue ménageant un logement de réception de l'amortisseur à la manière d'un manchon.

Chaque amortisseur est élastiquement déformable entre deux points de fixation, par l'intermédiaire desquels points de fixation l'amortisseur est placé sous contrainte entre le manchon qui le loge et un organe de prise au moyeu par l'intermédiaire d'un embiellage. Chaque amortisseur comporte, entre les moyens à déformation élastique qu'il intègre, des points de fixation opposés dont un point de fixation proximal et un point de fixation distal.

Ces points de fixation sont respectivement en prise articulée sur le manchon qui loge l'amortisseur et sur un dit organe de prise de l'amortisseur au moyeu par l'intermédiaire de l'embiellage. Dans ces conditions, il est à considérer diverses configurations selon lesquelles chaque amortisseur est placé sous contraintes en conséquence des oscillations en traînée au moins de la pale équipée du manchon logeant un amortisseur donné, sinon aussi des oscillations en traînée d'une pale voisine à cette pale, sur laquelle pale voisine ledit amortisseur donné est en prise par l'intermédiaire de l'embiellage.

Selon la présente invention, un tel rotor de giravion est principalement reconnaissable en ce que pour chacun des manchons, l'amortisseur que loge un manchon donné est en prise articulée sur l'embiellage par l'intermédiaire d'un bras de levier articulé sur le manchon.

Les bras de levier dont les manchons sont individuellement équipés, sont des éléments de transmission d'efforts articulés sur les manchons, qui complètent les embiellages de liaison individuelle entre les amortisseurs et les organes de prise des embiellages au moyeu. Les conditions de mise sous contraintes et de sollicitations des amortisseurs sont aisément adaptables à partir d'une modification des positions relatives sur les bras de levier de l'articulation des bras de levier sur les manchons, de l'articulation des embiellages sur les bras de levier et de l'articulation des amortisseurs sur les bras de levier. Les conditions de mise sous contrainte et de sollicitations spécifiques des amortisseurs peuvent être ajustées selon les besoins en amortissement à procurer, à partir d'une dite adaptation aisée des bras de levier.

En outre, les bras de levier sont des organes de raccordement intermédiaires entre les amortisseurs et les embiellages sur lesquels les amortisseurs sont respectivement en prise par l'intermédiaire des bras de levier. Les bras de levier sont préférentiellement articulés en pivotement sur le manchon, un tel raccordement intermédiaire entre les amortisseurs et les embiellages permettant d'éviter de faire supporter aux amortisseurs des efforts divergents de ceux visant à amortir les oscillations en traînée des pales. Chaque bras de levier est monté pivotant sur le manchon qui lui est affecté autour d'un axe de pivot préférentiellement parallèle à l'axe de traînée de la pale porté par ce manchon.

La structure générale du dispositif d'amortissement est aisément transposable à un quelconque rotor équipant un quelconque giravion. Le montage avantageux des amortisseurs logés dans les manchons ne fait pas obstacle à une exploitation du dispositif d'amortissement pour différents rotors dont les besoins d'amortissement des oscillations en traînée des pales sont spécifiques. Une telle exploitation diversifiée est obtenue sans modification structurelle majeure du dispositif d'amortissement, à partir d'une adaptation aisée à réaliser des bras de levier, et plus particulièrement une adaptation des dites positions relatives des diverses articulations entre elles sur les bras de levier.

La dite adaptation du bras de levier réside notamment dans une adaptation :
-) de sa conformation générale et plus particulièrement de l'angle que forme potentiellement des branches du bras de levier sur lesquelles sont respectivement ménagés les diverses articulations,
-) de la distance de séparation les unes des autres des différentes dites articulations,
-) de la répartition sur le bras de levier du voisinage des dites articulations les unes par rapport aux autres.

L'ajustement des conditions de travail des amortisseurs par l'intermédiaire de ladite adaptation des bras de levier, autorise l'exploitation d'amortisseurs qui peuvent être librement choisis selon les besoins en amortissement et/ou selon une configuration spécifique du rotor. Une telle liberté de choix est notamment relative aux capacités générales de déformation élastique des amortisseurs ou relative à la structure propre des amortisseurs, telle que pour des amortisseurs respectivement de conformation allongée ou de conformation cylindrique.

De surcroit, dans le cas d'une exploitation d'amortisseurs de conformation allongée, la position de l'articulation du bras de levier sur le manchon peut être plus ou moins éloignée par rapport à l'axe de pivot en traînée du manchon sur le moyeu. Plus particulièrement et selon les besoins pour un rotor donné, les positions respectives des points de fixation distal et proximal des amortisseurs par rapport à l'axe de pivot en traînée du manchon sur le moyeu peuvent être inversées. Plus particulièrement, les amortisseurs peuvent être avantageusement choisis de conformation allongée en étant notamment agencés en vérins. Par rapport à l'axe de pivot en traînée du manchon sur le moyeu, les positions des articulations respectivement du corps des vérins sur le manchon et du piston des vérins sur les bras de levier, peuvent être librement choisies l'une vis-à-vis de l'autre selon la position souhaitée de l'articulation des bras de levier sur le manchon.

L'ajustement des conditions de travail des amortisseurs à partir d'une adaptation des bras de levier permet aussi de mettre en relation des amortisseurs de structure donnée avec des embiellages de quelconques architectures, voire notamment permet de simplifier l'architecture de tels embiellages à partir de l'exploitation des caractéristiques de transmission d'effort procurées par les bras de levier et des caractéristiques propres des amortisseurs.

Plus particulièrement, les bras de levier équipant les manchons sont avantageusement des outils de réglage des caractéristiques d'amortissement des oscillations en traînée des pales par le dispositif d'amortissement, selon les positions relatives sur un bras de levier donné entre l'articulation du bras de levier sur le manchon, l'articulation de l'embiellage sur le bras de levier et l'articulation de l'un quelconque des points de fixation de l'amortisseur sur le bras de levier.

L'amortisseur logé dans un manchon donné est notamment en prise articulée à l'un quelconque de ses dits point de fixation sur l'embiellage par l'intermédiaire du bras de levier, ce point de fixation étant considéré comme un point de fixation distal. Cet amortisseur est notamment encore en prise articulée à l'autre de ses dits point de fixation sur le manchon, voire le cas échéant par l'intermédiaire du moyeu tel que visé ci-après, ce point de fixation étant considéré comme un point de fixation proximal.

Plus particulièrement, l'amortisseur logé dans un manchon donné est en prise articulée sur le manchon qui le loge à un dit point de fixation, considéré comme proximal. Ce point de fixation proximal est en prise indifféremment directement sur ce manchon ou indirectement par l'intermédiaire d'une structure du moyeu exploitée pour le montage de ce manchon au moyeu.

Selon une forme préférée de réalisation, pour chacun des manchons et au regard d'un manchon donné, l'embiellage est articulé en rotule sur le bras de levier et le bras de levier est articulé en pivot sur le manchon. L'amortisseur quant à lui est articulé indifféremment en pivot ou en rotule en ses points de fixation respectivement sur le bras de levier et sur le manchon, le cas échéant par l'intermédiaire du moyeu.

Plus spécifiquement et selon une forme avantageuse de réalisation, les manchons sont individuellement montés sur le moyeu par l'intermédiaire d'organes à butée sphérique respectifs. Dans ce cas, l'amortisseur logé dans un manchon donné est éventuellement placé en prise articulée sur ce manchon par l'intermédiaire d'une structure de montage de l'organe à butée sphérique sur le moyeu, par exemple par l'intermédiaire d'une chape d'articulation au moyeu du point de fixation proximal de l'amortisseur. Les efforts auxquels sont soumis les amortisseurs sont avantageusement supportés par le moyeu, en préservant les manchons.

Selon divers agencement potentiels du bras de levier, le bras de levier est par exemple de conformation générale rectiligne ou par exemple encore de conformation générale en dièdre ou par analogie arquée. Le dièdre est notamment défini par un couple de branches composant le bras de levier.

Selon une forme de réalisation selon laquelle le bras de levier est conformé en dièdre, l'embiellage et l'amortisseur sont de préférence respectivement articulés aux extrémités libres des branches, la zone de jonction rigide des branches l'une à l'autre étant exploitée pour ménager l'articulation du bras de levier sur le manchon.

Selon différentes configurations alternatives possibles :
-) l'articulation de l'amortisseur et l'articulation de l'embiellage sur le bras de levier sont disposées de part et d'autre de l'articulation du bras de levier sur le manchon.
-) l'articulation du bras de levier sur le manchon est disposée à une extrémité du bras de levier, l'articulation de l'amortisseur et l'articulation de l'embiellage sur le bras de levier étant disposées à l'autre extrémité du bras de levier.
-) l'articulation de l'embiellage sur le bras de levier est disposée entre l'articulation du bras de levier sur le manchon et l'articulation de l'amortisseur sur le bras de levier.

L'amortisseur est susceptible d'être indifféremment un amortisseur cylindrique à amortissement par torsion ou un amortisseur allongé à amortissement par traction/compression.

Dans le cas où l'amortisseur est un amortisseur allongé étendu à l'intérieur du manchon suivant sa direction générale d'extension, l'une quelconque de ses extrémités considérée comme distale est articulée sur le bras de levier, l'autre de ses extrémités considérée comme proximale étant indifféremment directement articulée sur le manchon ou sur le moyeu considéré comme un organe intermédiaire entre le manchon et le point de fixation proximal de l'amortisseur.

Il est cependant préféré d'articuler l'amortisseur au manchon, en son fond proche du moyeu notamment, pour permettre un montage de l'amortisseur articulé en pivotement à chacune de ses extrémités respectivement sur le bras de levier et sur le manchon, et/ou pour permettre une articulation en pivotement du bras de levier sur le manchon. Dans le cas où le point de fixation proximal de chacun des amortisseurs est articulé directement du le moyeu, une telle articulation est du type à rotule pour autoriser les divers mouvements nécessaires du manchon par rapport au moyeu.

Les modalités de montage de l'amortisseur à l'intérieur du manchon qui le loge, permettent une exploitation avantageuse d'un amortisseur de conformation allongée. La structure et les caractéristiques de fonctionnement de tels amortisseurs leurs confèrent une fiabilité et une pérennité avantageuses, et permettent de régler aisément les conditions spécifiques de leurs sollicitations propres à amortir les oscillations en traînée des pales. De tels amortisseurs allongés sont aisément transposables selon leurs caractéristiques d'un quelconque rotor à un autre quelconque rotor selon les besoins. En outre, le montage articulé à l'intérieur des manchons de tels amortisseurs allongés est facilité.

Le manchon est agencé en enveloppe de confinement de l'amortisseur et de logement du bras de levier. Ladite enveloppe comporte à son travers une fenêtre de passage d'une branche du bras de levier sur laquelle est articulé l'embiellage.

Les agencements potentiels des manchons sont susceptibles d'être divers, dès lors qu'un tel manchon ménage avantageusement une enveloppe formant un bouclier aérodynamique masquant et/ou abritant l'amortisseur qu'il reçoit. Les manchons à évidement intérieur permettent de confiner aisément les amortisseurs, en limitant l'encombrement et sans porter atteinte à l'aisance de l'adaptation du dispositif d'amortissement pour un quelconque rotor d'un quelconque giravion. Chaque manchon loge un amortisseur et la quasi-totalité du bras de levier sur lequel cet amortisseur est en prise articulée, à l'exception d'une partie d'émergence du bras de levier hors de ladite enveloppe pour sa mise en prise articulée avec l'embiellage. Une telle partie d'émergence du bras de levier est potentiellement restreinte à une extrémité de l'une de ses branches sur laquelle est articulé l'embiellage.

Chaque manchon comporte de préférence des moyens de refroidissement de l'amortisseur qu'il loge. Les amortisseurs étant avantageusement logés à l'intérieur des manchons, de tels moyens de refroidissement sont susceptibles d'être exploités et d'être aisément organisés en fonction des conditions de travail spécifiques des amortisseurs.

De tels moyens de refroidissement peuvent être aisément implantés sur les manchons, en étant par exemple agencés au moins en passages d'air forcé ménagés à travers la paroi des manchons délimitant ladite enveloppe. L'efficacité du refroidissement des amortisseurs par admission de flux d'air à l'intérieur des manchons est au besoin complétée par l'implantation, voire l'intégration, d'échangeurs de chaleur à ailettes ou analogues sur le corps des amortisseurs.

Plus particulièrement pour chacun des manchons et au regard d'un manchon donné, l'enveloppe formée par le manchon comporte à son travers au moins un passage d'air forcé de refroidissement de l'amortisseur.

Plus particulièrement encore pour chacun des manchons et au regard d'un manchon donné, un corps de l'amortisseur logé dans ce manchon est pourvu d'un échangeur de chaleur à ailettes.

Ledit organe de prise de l'embiellage au moyeu est notamment un organe d'attache indifféremment incorporé au moyeu ou à un manchon voisin du manchon logeant l'amortisseur en prise sur cet embiellage. L'embiellage est susceptible de comporter au moins un élément de transmission, sinon un jeu d'éléments de transmission articulés entre eux.

Les avantages procurés par les bras de levier pour adapter les modalités de fonctionnement du dispositif d'amortissement selon les besoins, peuvent être aisément complétés par une libre adaptation de l'architecture des embiellages. Les embiellages sont susceptibles de comporter une ou plusieurs bielles articulées entre elles, voire encore des bras de levier interposés entre les bielles. A partir de mêmes modalités de montage des amortisseurs à l'intérieur des manchons par l'intermédiaire de bras de levier spécifiques, l'architecture de l'embiellage est aisément adaptable selon les besoins pour un rotor donné, voire peut être simplifiée.

La présente invention a aussi pour objet un giravion équipé d'un rotor tel qu'il vient d'être décrit.

Des exemples de réalisation de la présente invention vont être décrits en relation avec les figures des planches annexées, dans lesquelles :
- la fig.1 est une illustration partielle d'un rotor de giravion équipé d'un dispositif d'amortissement des oscillations en traînée des pales de ce rotor, selon un exemple de réalisation de la présente invention.
- la fig.2 est une illustration d'un manchon procurant une liaison entre une pale et un moyeu d'un rotor de giravion, logeant un amortisseur articulé sur ce manchon selon un autre exemple de réalisation de la présente invention.
- les fig.3 à fig.8 sont des illustrations partielles de rotors de giravion équipés de dispositifs d'amortissement selon des formes respectives de réalisation conformes à un rotor de la présente invention.
- la fig.9 est une représentation d'une extrémité proximale d'un manchon procurant une liaison entre une pale et un moyeu d'un rotor de giravion, selon un autre exemple de réalisation de la présente invention.
- les fig.10 et fig.11 sont des illustrations d'exemples respectifs de réalisation d'un bras de levier que comprend un dispositif d'amortissement équipant un rotor de la présente invention.

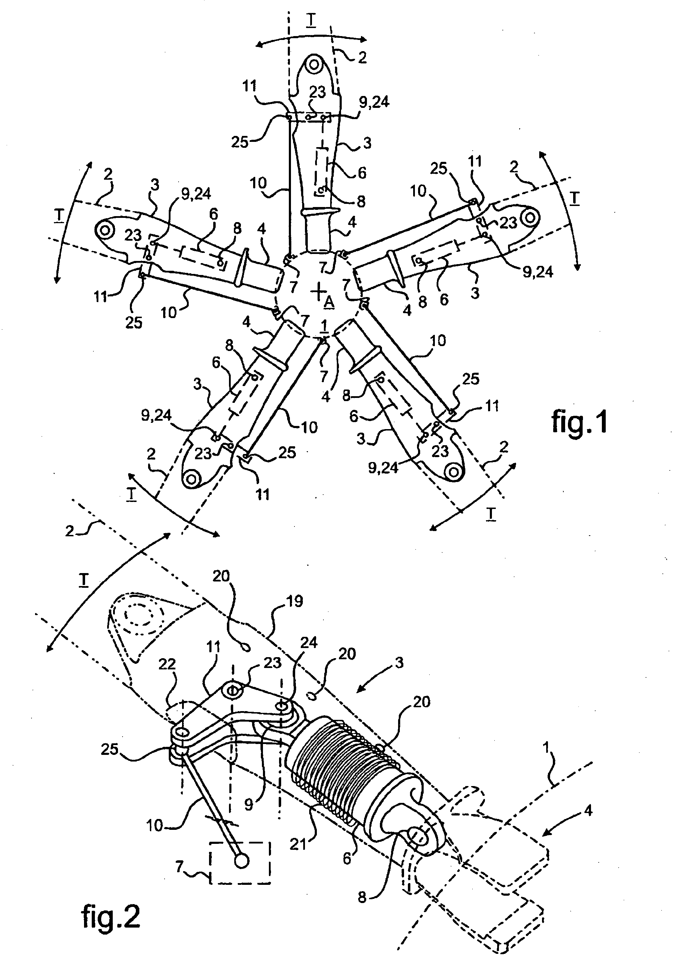

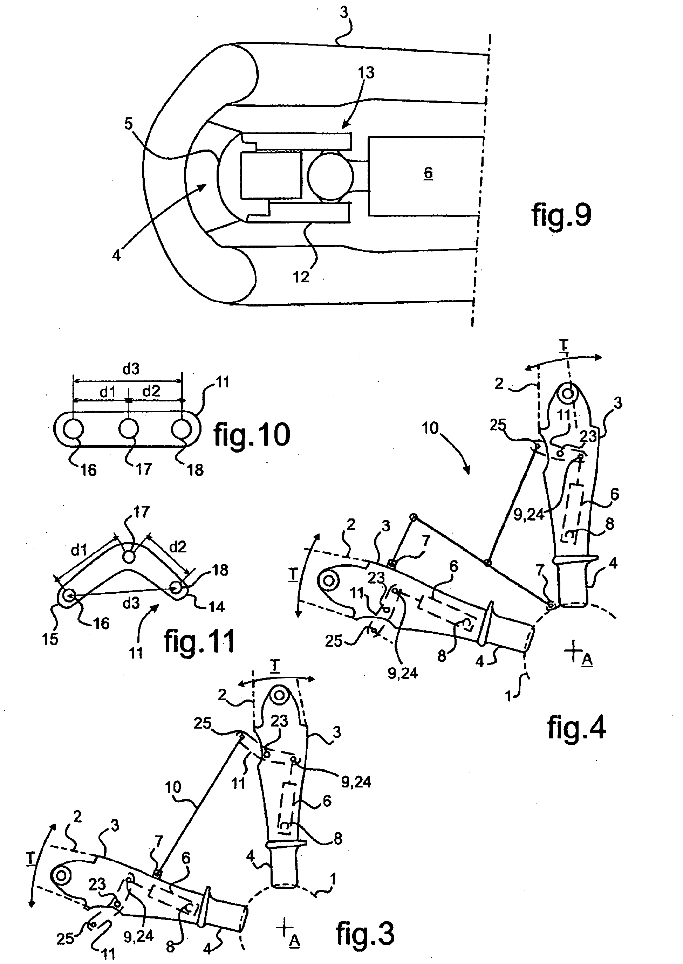

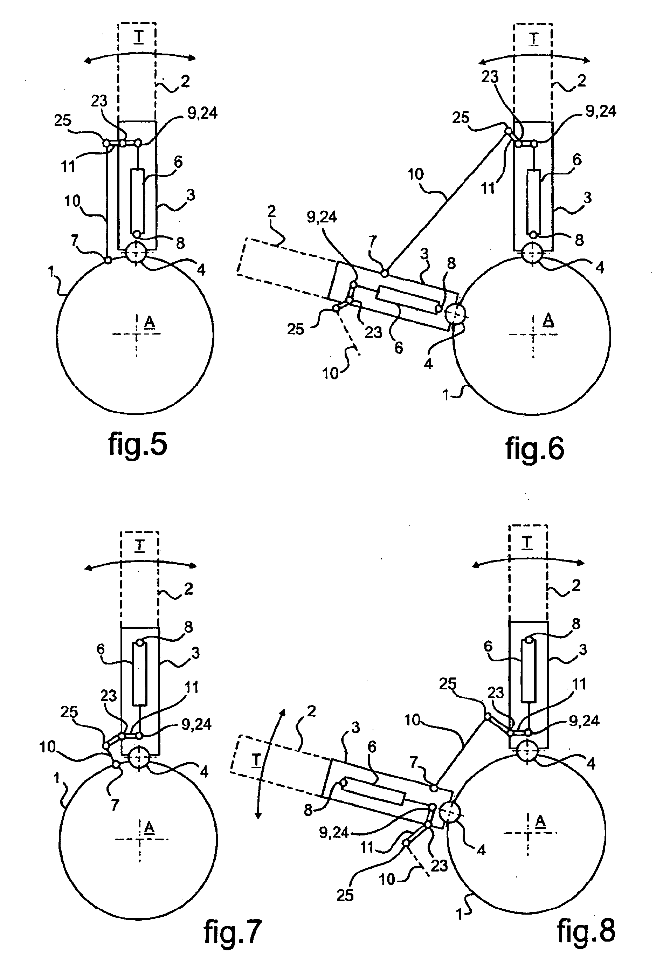

Sur les fig.1 à fig.8, un rotor de giravion comprend un moyeu 1 tournant sur lequel sont montées des pales 2 pour leur entraînement en rotation. Les pales 2 sont radialement réparties sur le moyeu 1, en étant assemblées au moyeu 1 par l'intermédiaire de manchons 3 respectifs. Les pales sont individuellement portées par un manchon 3 qui est monté mobile sur le moyeu 1 par l'intermédiaire de moyens de jonction 4 articulée. A titre d'exemple, de tels moyens de jonction 4 mettent avantageusement en oeuvre un organe de butée sphérique 5, tel qu'illustré sur la fig.9.

Selon les exemples de réalisation illustrés, les pales 2 sont solidaires du manchon 3 qui leur est affecté, par assemblage de leur pied de pale au manchon 3. De manière analogue, les pales 2 sont susceptibles d'être solidaires des manchons 3 par intégration.

En cours de rotation du rotor, les pales 2 sont soumises à des oscillations en traînée T qu'il est nécessaire d'amortir. De telles oscillations en traînée T sont provoquées autour d'un axe de pivot en traînée des manchons sur le moyeu. Un tel axe de pivot en traînée est sensiblement parallèle à l'axe A de rotation du moyeu 1. Pour amortir les oscillations en traînée T des pales 2, le rotor est équipé d'un dispositif d'amortissement, comprenant dans sa généralité des amortisseurs 6 interposés entre les manchons 3 et des organes de prise 7 au moyeu 1, soit directement soit indirectement par l'intermédiaire d'une pale 2. Les architectures respectives de montage des amortisseurs 6 sur le rotor sont similaires de l'un à l'autre des amortisseurs 6.

Pour chacun des amortisseurs 6, l'amortisseur 6 est en prise en des points de fixation 8,9 opposés respectivement sur un manchon 3 qui le loge et sur un organe de prise 7 au moyeu 1. L'amortisseur 6 est un organe élastiquement déformable entre ses dits points de fixation 8,9, et est potentiellement de conformation cylindrique en travaillant en torsion, ou de conformation allongée en travaillant en traction/compression tel qu'illustré sur les figures.

Plus particulièrement, un point de fixation distal 9 de chacun des amortisseurs 6 est en prise articulée sur une première extrémité d'un embiellage 10. Chaque embiellage 10 est par ailleurs en prise articulée sur un dit organe de prise 7 qui lui est affecté à une deuxième extrémité de l'embiellage 10 opposée à sa première extrémité. Les embiellages 10 sont en prise articulée sur le moyeu 1 soit directement, tel qu'illustré sur les fig.1, fig.5 et fig.7, soit indirectement tel qu'illustré sur les fig.3, fig.4, fig.6 et fig.8. La prise indirecte des embiellages 10 sur le moyeu 1 est notamment réalisée par l'intermédiaire de manchons 3 voisins au manchon 3 logeant un amortisseur 6 en prise articulée sur un embiellage 10 considéré.

Selon diverses variantes de réalisation, les embiellages 10 sont susceptibles de comprendre une bielle unique, tel qu'illustré sur les fig.1, fig.3 et fig.5 à fig.8, ou de comprendre plusieurs bielles articulées entre elles tel qu'illustré sur la fig.4. La ou les bielles sont considérées dans leur généralité comme des éléments de transmission mécanique d'efforts, à partir desquels éléments de transmission sont configurées diverses architectures potentielles des embiellages 10 entre leurs extrémités. Les embiellages 10 peuvent comporter divers éléments de transmission, notamment non seulement une ou plusieurs bielles, mais aussi d'autres éléments de transmission mécanique d'efforts tels que des bras de levier, voire encore des amortisseurs annexes interposés sur l'architecture des embiellages 10 considérés entre leurs extrémités.

D'autres architectures d'agencement des embiellages 10 sont susceptibles d'être mises en oeuvre selon les besoins en amortissement en traînée des pales 2, de tels besoins étant dépendants de la structure générale du rotor et/ou des caractéristiques du giravion équipé d'un tel rotor.

Les manchons 3 logent chacun individuellement un amortisseur 6, cet amortisseur 6 étant en prise articulée sur un embiellage 10 par l'intermédiaire d'un bras de levier 11. Le bras de levier 11 est lui-même articulé sur le manchon 3 logeant cet amortisseur 6, en pivotement notamment. Il est remarquable que chacun d'amortisseur 6 est en prise articulée à chacun de ses points de fixation 8,9 sur le manchon 3 qui le loge. En effet, le point de fixation distal 9 de l'amortisseur 6 est en prise articulée par l'intermédiaire d'un dit bras de levier 11 à la fois sur un embiellage 10 et sur le manchon 3 logeant cet amortisseur 6. Le point de fixation proximal 8 de l'amortisseur 6 est quant à lui en prise articulée sur le manchon 3, soit directement soit plus marginalement par l'intermédiaire du moyeu 1 tel qu'illustré sur la fig.9.

Plus précisément sur la fig.9, un quelconque manchon 3 du rotor loge un amortisseur 6 qui est en prise articulée à son point de fixation proximal 8 sur le moyeu 1. Un organe de butée sphérique 5 est interposé entre le moyeu 1 et le manchon 3 pour leur jonction articulée l'un à l'autre. Il est mis à profit une structure de montage 12 de l'organe de butée sphérique 5 sur le moyeu 1 pour articuler l'amortisseur 6 sur le moyeu 1. Le moyeu 1 est muni d'un organe d'articulation 13 du point de fixation proximal de l'amortisseur 6 sur le moyeu 1, tel que par exemple une chape. Un tel organe d'articulation 13 est avantageusement aisément intégré à ladite structure de montage 12.

Les bras de levier 11 comportent chacun et pour un bras de levier donné une prise d'articulation 23 de préférence en pivotement du bras de levier sur ledit manchon 3, une prise d'articulation 24 potentiellement en rotule mais de préférence en pivotement du point de fixation distal 9 de l'amortisseur 6 sur le bras de levier 11, et une prise d'articulation 25 en rotule de l'embiellage 10 sur le bras de levier 11.

Les bras de levier 11 sont aptes à être diversement agencés selon les besoins d'amortissement des oscillations des pales 2 en traînée. Les bras de levier 11 constituent non seulement un organe d'articulation des amortisseurs 6 sur le manchon 3 qui les loge individuellement, mais aussi un organe de transmission d'efforts interposé entre un embiellage 10 et un amortisseur 6. Les caractéristiques structurelles d'un tel organe de transmission d'efforts agencé en bras de levier 11 sont facilement adaptables pour faire varier selon les besoins les conditions de sollicitation de l'amortisseur 6.

Plus particulièrement, les bras de levier 11 sont des organes de transmission mécanique d'efforts, dont les caractéristiques structurelles et dont les points d'articulation des embiellages 10 et des amortisseurs 6 respectivement affectés à ces bras de levier 11, peuvent être facilement adaptés selon les conditions recherchées de sollicitation de l'amortisseur pour amortir les oscillations en traînée des pales d'un quelconque rotor équipant un quelconque giravion.

Par exemple, chaque bras de levier 11 est susceptible d'être de conformation rectiligne en comportant des branches disposées dans le prolongement l'une de l'autre, tel que représenté sur la fig.10, ou de comporter des branches 14,15 concourantes en étant conformé en dièdre, et plus particulièrement en arceau ou en coude par exemple, tel que représenté sur la fig.11.

Chaque bras de levier 11 comporte trois zones d'articulations 16,17,18. Une zone d'articulation médiane 17 est par exemple affectée à l'articulation du bras de levier 11 sur le manchon 3. Les deux autres zones d'articulations 16 et 18 sont disposées de part et d'autre de la zone d'articulation médiane 17, en bout des branches 14,15 formant le bras de levier 11. Les dites autres zones d'articulation 16 et 18 sont par exemple respectivement affectées à l'articulation d'un amortisseur 6 sur le bras de levier 11, et à l'articulation d'un embiellage 10 sur le bras de levier 11.

Selon diverses variantes de réalisation fondées sur une recherche de sollicitations de l'amortisseur adaptées aux besoins, ces zones d'articulation 16,17,18 sont susceptibles d'être diversement affectées à l'une ou l'autre des dites articulations. Par ailleurs, les distances d1, d2 et d3 de séparation des différentes zones d'articulation 16,17,18 les unes des autres sont adaptables, pour faire varier les caractéristiques de mise en oeuvre du bras de levier 11 selon les besoins.

Sur la fig.2, le manchon 3 comporte une paroi ménageant une enveloppe 19 de confinement de l'amortisseur 6. Sur l'exemple de réalisation illustré, une telle enveloppe 19 délimite avantageusement l'évidement interne du manchon 3. L'enveloppe 19 comporte une fenêtre 22 d'émergence du bras de levier 11 hors du manchon 3, pour permettre la mise en prise articulée de l'embiellage 10 sur le bras de levier 11.

En cas de besoin selon les conditions de sollicitation de l'amortisseur 6, des moyens de refroidissement sont avantageusement exploités pour refroidir l'amortisseur 6. Par exemple, de tels moyens de refroidissement comprennent des passages d'air forcé 20 ménagés à travers l'enveloppe 19. De tels passages d'air forcé 20 sont susceptibles d'être complétés par un échangeur de chaleur à ailettes 21 implanté ou intégré au corps de l'amortisseur 6.

## Revendications

1. Rotor de giravion équipé d'un dispositif d'amortissement des oscillations en traînée des pales (2) du rotor, les pales (2) étant individuellement montées articulées sur un moyeu (1) tournant du rotor par l'intermédiaire de manchons (3) respectifs chacun articulés sur le moyeu (1), au moins autour d'un axe de traînée orienté sensiblement parallèlement à l'axe de rotation (A) du moyeu (1), le dispositif d'amortissement comprenant un jeu d'amortisseurs (6) chacun individuellement logés dans un dit manchon (3), chaque amortisseur (6) étant élastiquement déformable entre deux points de fixation (8,9) par l'intermédiaire desquels points de fixation (8,9) l'amortisseur (6) est placé sous contrainte entre le manchon (3) qui le loge et un organe de prise (7) au moyeu (1) par l'intermédiaire d'un embiellage (10),
**caractérisé en ce que** pour chacun des manchons (3), l'amortisseur (6) que loge un manchon (3) donné est en prise articulée sur l'embiellage (10) par l'intermédiaire d'un bras de levier (11) articulé sur le manchon (3).

2. Rotor de giravion selon la revendication 1,
**caractérisé en ce que** les bras de levier (11) équipant les manchons (3) sont des outils de réglage des caractéristiques d'amortissement des oscillations en traînée des pales (2) par le dispositif d'amortissement, selon les positions relatives sur un bras de levier (11) donné entre l'articulation (23) du bras de levier (11) sur le manchon (3), l'articulation (25) de l'embiellage (10) sur le bras de levier (11) et l'articulation (24) de l'un quelconque des dits points de fixation (8,9) de l'amortisseur (6) sur le bras de levier (11).

3. Rotor de giravion selon l'une quelconque des revendications 1 et 2,
**caractérisé en ce que** l'amortisseur (6) logé dans un manchon (3) donné est en prise articulée à l'un quelconque de ses dits point de fixation (8,9) sur l'embiellage (10) par l'intermédiaire du bras de levier (11), et est en prise articulée à l'autre de ses dits point de fixation (8,9) sur le manchon (3).

4. Rotor de giravion selon l'une quelconque des revendications 1 à 3,
**caractérisé en ce que** l'amortisseur (6) logé dans un manchon (3) donné est en prise articulée sur le manchon (3) qui le loge à un point de fixation proximal (8), indifféremment directement sur ce manchon (3) ou indirectement par l'intermédiaire d'une structure (12) du moyeu (1) exploitée pour le montage de ce manchon (3) au moyeu (1).

5. Rotor de giravion selon l'une quelconque des revendications 1 à 4,
**caractérisé en ce que** :
-) l'embiellage (10) est articulé en rotule sur le bras de levier (11),
-) le bras de levier (11) est articulé en pivot sur le manchon (3) autour d'un axe de pivot orienté parallèlement à l'axe de traînée de la pale (2) porté par ce manchon (3), et
-) l'amortisseur (6) est articulé indifféremment en pivot ou en rotule en ses points de fixation (8,9) respectivement sur le bras de levier (11) et sur le manchon (3).

6. Rotor de giravion selon l'une quelconque des revendications 1 à 5,
**caractérisé en ce que** les manchons (3) étant individuellement montés sur le moyeu (1) par l'intermédiaire d'organes à butée sphérique (5) respectifs, l'amortisseur (6) logé dans un manchon (3) donné est en prise articulée sur ce manchon (3) par l'intermédiaire d'une structure de montage (12) de l'organe à butée sphérique (5) sur le moyeu (1).

7. Rotor de giravion selon l'une quelconque des revendications 1 à 6,
**caractérisé en ce que** le bras de levier (11) est de conformation générale rectiligne.

8. Rotor de giravion selon l'une quelconque des revendications 1 à 6,
**caractérisé en ce que** le bras de levier (11) est de conformation générale en dièdre.

9. Rotor de giravion selon l'une quelconque des revendications 1 à 8,
**caractérisé en ce que** l'articulation (24) de l'amortisseur (6) et l'articulation (25) de l'embiellage (10) sur le bras de levier (11) sont disposées de part et d'autre de l'articulation (23) du bras de levier (11) sur le manchon (3).

10. Rotor de giravion selon l'une quelconque des revendications 1 à 8,
**caractérisé en ce que** l'articulation (23) du bras de levier (11) sur le manchon (3) est disposée à une extrémité du bras de levier (11), l'articulation (24) de l'amortisseur (6) et l'articulation (25) de l'embiellage (10) sur le bras de levier (11) étant disposées à l'autre extrémité du bras de levier (11).

11. Rotor de giravion selon l'une quelconque des revendications 1 à 8,
**caractérisé en ce que** l'articulation (25) de l'embiellage (10) sur le bras de levier (11) est disposée entre l'articulation (23) du bras de levier (11) sur le manchon (3) et l'articulation (24) de l'amortisseur (6) sur le bras de levier (11).

12. Rotor de giravion selon l'une quelconque des revendications 1 à 11,
**caractérisé en ce que** l'amortisseur (6) est indifféremment un amortisseur cylindrique à amortissement par torsion ou un amortisseur allongé à amortissement par traction/compression.

13. Rotor de giravion selon l'une quelconque des revendications 1 à 12,
**caractérisé en ce que** l'amortisseur (6) étant un amortisseur allongé étendu à l'intérieur du manchon (3) suivant sa direction générale d'extension, l'une quelconque de ses extrémités considérée comme distale est articulée sur le bras de levier (11), l'autre de ses extrémités considérée comme proximale étant indifféremment articulée sur le manchon (3) ou sur le moyeu (1).

14. Rotor de giravion selon l'une quelconque des revendications 1 à 13,
**caractérisé en ce que** le manchon (3) est agencé en enveloppe (19) de confinement de l'amortisseur (6) et de logement du bras de levier (11), ladite enveloppe (19) comportant à son travers une fenêtre (22) de passage d'une branche du bras de levier (11) sur laquelle est articulée l'embiellage (10).

15. Rotor de giravion selon l'une quelconque des revendications 1 à 14,
**caractérisé en ce que** le manchon (3) comporte des moyens de refroidissement de l'amortisseur.

16. Rotor de giravion selon les revendications 13 et 14,
**caractérisé en ce que** l'enveloppe (19) formée par le manchon (3) comporte à son travers au moins un passage d'air forcé (20) de refroidissement de l'amortisseur (6).

17. Rotor de giravion selon l'une quelconque des revendications 15 et 16,
**caractérisé en ce qu'**un corps de l'amortisseur (6) est pourvu d'un échangeur de chaleur à ailettes (21).

18. Rotor de giravion selon l'une quelconque des revendications 1 à 17,
**caractérisé en ce que** ledit organe de prise (7) de l'embiellage (10) au moyeu (1) est un organe d'attache indifféremment incorporé au moyeu (1) ou à un manchon (3) voisin du manchon (3) logeant l'amortisseur (6) en prise sur cet embiellage (10).

19. Rotor de giravion selon l'une quelconque des revendications 1 à 18,
**caractérisé en ce que** l'embiellage (10) comporte au moins un élément de transmission sinon un jeu d'éléments de transmission articulés entre eux.

20. Giravion équipé d'un rotor selon l'une quelconque des revendications 1 à 19.

## Patentansprüche

1. Rotor eines Drehflügelflugzeugs mit einer Vorrichtung zum Dämpfen von Luftwiderstandsschwingungen von Rotorblättern (2) des Rotors, wobei die Rotorblätter (2) einzeln an einer sich drehenden Nabe (1) des Rotors über jeweilige an der Nabe (1) angelenkte Muffen (3), die mindestens um eine Luftwiderstandsachse drehbar montiert sind, die im Wesentlichen parallel zu der Drehachse (A) der Nabe (1) ausgerichtet ist, drehbar montiert sind, wobei die Dämpfungsvorrichtung einen Satz von Dämpfern (6) aufweist, die jeweils in einer besagten Muffe (3) gelagert sind, wobei jeder Dämpfer (6) elastisch verformbar ist zwischen zwei Befestigungspunkten (8, 9), mittels derer der Dämpfer (6) zwischen der Muffe (3), in der er gelagert ist, und einem Halteorgan (7) an der Nabe (1) über ein Gestänge (10) unter Spannung gehalten ist,
**dadurch gekennzeichnet, dass** für jede der Muffen (3) der Dämpfer (6), der in einer gegebenen Muffe (3) gelagert ist, auf dem Gestänge (10) über einen Hebelarm (11), der an der Muffe (3) angelenkt ist, gelenkig gehaltert wird.

2. Rotor eines Drehflügelflugzeugs nach Anspruch 1,
**dadurch gekennzeichnet, dass** die Hebelarme (11), mit denen die Muffen (3) ausgerüstet sind, Einstellwerkzeuge sind zum Einstellen von Kennwerten der Dämpfung von Luftwiderstandsschwingungen der Rotorblätter (2) durch die Dämpfungsvorrichtung, gemäß den Relativlagen auf dem gegebenen Hebelarm (11) zwischen dem Gelenk (23) des Hebelarms (11) auf der Muffe (3), dem Gelenk (25) des Gestänges (10) auf dem Hebelarm (11), und dem Gelenk (24) eines beliebigen Punktes der Befestigungspunkte (8, 9) des Dämpfers (6) auf dem Hebelarm (11).

3. Rotor eines Drehflügelflugzeugs nach einem der Ansprüche 1 und 2,
**dadurch gekennzeichnet, dass** der in einer gegebenen Muffe (3) gelagerte Dämpfer (6) gelenkig an einem beliebigen der Befestigungspunkte (8, 9) auf dem Gestänge (10) über den Hebelarm (11) und an dem anderen der Befestigungspunkte (8, 9) auf der Muffe (3) gelenkig gehaltert ist.

4. Rotor eines Drehflügelflugzeugs nach einem der Ansprüche 1 bis 3, **dadurch gekennzeichnet, dass** der in einer gegebenen Muffe (3) gelagerte Dämpfer (6) an der Muffe (3), in der er an einem proximalen Befestigungspunkt (8) gelagert ist, gelenkig gehaltert ist, unterschiedslos, ob direkt an der Muffe (3) oder indirekt über einen Aufbau (12) der Nabe (1), der für die Montage dieser Muffe (3) an der Nabe (1) verwendet wird.

5. Rotor eines Drehflügelflugzeugs nach einem der Ansprüche 1 bis 4, **dadurch gekennzeichnet, dass**
-) das Gestänge (10) kugelgelenkig an den Hebelarm (11) angelenkt ist,
-) der Hebelarm (11) schwenkbar an der Muffe (3) um eine Schwenkachse gelagert ist, die parallel zu einer Achse des Luftwiderstands des Rotorblatts (2), das von dieser Muffe (3) getragen wird, ausgerichtet ist, und
-) der Dämpfer (6) unterschiedslos schwenkbar oder kugelgelenkig an seinen Befestigungspunkten (8, 9) jeweils am Hebelarm (11) und an der Muffe (3) angelenkt ist.

6. Rotor eines Drehflügelflugzeugs nach einem der Ansprüche 1 bis 5, **dadurch gekennzeichnet, dass**, da die Muffen (3) einzeln an der Nabe (1) über jeweilige kugelige Anschlagsorgane (5) montiert sind, der Dämpfer (6), der in einer gegebenen Muffe (3) gelagert ist, gelenkig an dieser Muffe (3) über einen Montageaufbau (12) des kugelförmigen Anschlagsorgans (5) auf der Nabe (1) gehaltert ist.

7. Rotor eines Drehflügelflugzeugs nach einem der Ansprüche 1 bis 6, **dadurch gekennzeichnet, dass** der Hebelarm (11) im Wesentlichen rechtwinklig gestaltet ist.

8. Rotor eines Drehflügelflugzeugs nach einem der Ansprüche 1 bis 6, **dadurch gekennzeichnet, dass** der Hebelarm (11) im Wesentlichen diederförmig ist.

9. Rotor eines Drehflügelflugzeugs nach einem der Ansprüche 1 bis 8, **dadurch gekennzeichnet, dass** das Gelenk (24) des Dämpfers (6) und das Gelenk (25) des Gestänges (10) auf dem Hebelarm (11) zu beiden Seiten des Gelenks (23) des Hebelarms (11) an der Muffe (3) angeordnet sind.

10. Rotor eines Drehflügelflugzeugs nach einem der Ansprüche 1 bis 8, **dadurch gekennzeichnet, dass** das Gelenk (23) des Hebelarms (11) an der Muffe (3) an einem Ende des Hebelarms (11) angeordnet ist, wobei das Gelenk (24) des Dämpfers (6) und das Gelenk (25) des Gestänges (10) auf dem Hebelarm (11) am anderen Ende des Hebelarms (11) angeordnet sind.

11. Rotor eines Drehflügelflugzeugs nach einem der Ansprüche 1 bis 8, **dadurch gekennzeichnet, dass** das Gelenk (25) des Gestänges (10) auf dem Hebelarm (11) zwischen dem Gelenk (23) des Hebelarms (11) auf der Muffe (3) und dem Gelenk (24) des Dämpfers (6) am Hebelarm (11) angeordnet ist.

12. Rotor eines Drehflügelflugzeugs nach einem der Ansprüche 1 bis 11,
**dadurch gekennzeichnet, dass** der Dämpfer (6) unterschiedslos ein Zylinderdämpfer mit Torsionsdämpfung oder ein länglicher Dämpfer mit Zug- oder Druckdämpfung ist.

13. Rotor eines Drehflügelflugzeugs nach einem der Ansprüche 1 bis 12,
**dadurch gekennzeichnet, dass** der Dämpfer (6) ein ähnlicher Dämpfer ist, der sich im Inneren der Muffe (3) in Richtung seiner Haupterstreckung erstreckt, wobei ein beliebiges seiner Enden, welches als distales Ende angesehen wird, an dem Hebelarm (11) angelenkt ist, und das andere seiner Ende, welches als proximales Ende angesehen wird, unterschiedslos an der Muffe (3) oder der Nabe (1) angelenkt ist.

14. Rotor eines Drehflügelflugzeugs nach einem der Ansprüche 1 bis 13,
**dadurch gekennzeichnet, dass** die Muffe (3) als Schutzhülle (19) des Dämpfers (6) ausgebildet ist und zur Lagerung des Hebelarms (11), wobei die Hülle (19) ein quer durchgehendes Durchtrittsfenster (22) eines Abschnitts des Hebelarms (11), an dem das Gestänge (10) angelenkt ist, aufweist.

15. Rotor eines Drehflügelflugzeugs nach einem der Ansprüche 1 bis 14,
**dadurch gekennzeichnet, dass** die Muffe (3) Kühlmittel für den Dämpfer aufweist.

16. Rotor eines Drehflügelflugzeugs nach den Ansprüchen 13 und 14, **dadurch gekennzeichnet, dass** die von der Muffe (3) gebildete Hülle (19) quer durchgehend mindestens einen Durchgang für beschleunigte Kühlungsluft (20) des Dämpfers (6) aufweist.

17. Rotor eines Drehflügelflugzeugs nach einem der Ansprüche 15 und 16,
**dadurch gekennzeichnet, dass** ein Körper des Dämpfers (6) mit einem Kühlrippen-Wärmetauscher (21) versehen ist.

18. Rotor eines Drehflügelflugzeugs nach einem der Ansprüche 1 bis 17,
**dadurch gekennzeichnet, dass** das Halteorgan (7) des Gestänges (10) an der Nabe (1) ein Befestigungsorgan ist, welches unterschiedslos in der Nabe (1) oder in einer Muffe (3), die benachbart zur Muffe (3) angeordnet ist, in der der Dämpfer (6) in Eingriff mit diesem Gestänge (10) gelagert ist, integriert ist.

19. Rotor eines Drehflügelflugzeugs nach einem der Ansprüche 1 bis 18,
**dadurch gekennzeichnet, dass** das Gestänge (10) mindestens ein Übertragungselement, andernfalls einen Satz von Übertragungselementen, die untereinander gelenkig verbunden sind, aufweist.

20. Drehflügelflugzeug ausgerüstet mit einem Rotor nach einem der Ansprüche 1 bis 19.

## Claims

1. A rotorcraft rotor fitted with a device for damping drag oscillations of the blades (2) of the rotor, the blades (2) being individually mounted articulated to a rotary hub (1) of the rotor by means of respective sleeves (3) each articulated to the hub (1), at least about a drag axis oriented substantially parallel to the axis of rotation (A) of the hub (1), the damping device comprising a set of dampers (6) which are each individually housed in one said sleeve (3), each damper (6) being elastically deformable between two fastening points (8, 9) by means of which fastening points (8, 9) the damper (6) is placed under stress between the sleeve (3) which houses it and an engagement member (7) for engaging on the hub (1) by means of a linkage (10),
**characterised in that** for each of the sleeves (3) the damper (6) which is housed in a given sleeve (3) is in articulated engagement with the linkage (10) by means of a lever arm (11) which is articulated to the sleeve (3).

2. A rotorcraft rotor according to Claim 1,
**characterised in that** the lever arms (11) fitted on the sleeves (3) are tools for adjustment of the damping characteristics of the drag oscillations of the blades (2) by the damping device, according to the relative positions on a given lever arm (11) between the articulation (23) of the lever arm (11) on the sleeve (3), the articulation (25) of the linkage (10) on the lever arm (11) and the articulation (24) of any one of said fastening points (8, 9) of the damper (6) on the lever arm (11).

3. A rotorcraft rotor according to any one of Claims 1 and 2,
**characterised in that** the damper (6) housed in a given sleeve (3) is in articulated engagement at any one of its said fastening points (8, 9) on the linkage (10) by means of the lever arm (11), and is in articulated engagement at the other one of its said fastening points (8, 9) on the sleeve (3).

4. A rotorcraft rotor according to any one of Claims 1 to 3,
**characterised in that** the damper (6) housed in a given sleeve (3) is in articulated engagement on the sleeve (3) which houses it at a proximal fastening point (8), equally well directly on this sleeve (3) or indirectly by means of a structure (12) of the hub (1) which is used for mounting this sleeve (3) on the hub (1).

5. A rotorcraft rotor according to any one of Claims 1 to 4,
**characterised in that**:
- ) the linkage (10) is articulated as a ball joint on the lever arm (11),
- ) the lever arm (11) is articulated as a pivot on the sleeve (3) about a pivot axis oriented parallel to the drag axis of the blade (2) which is borne by this sleeve (3), and
- ) the damper (6) is articulated equally well as a pivot or as a ball joint at its fastening points (8, 9) on the lever arm (11) and on the sleeve (3) respectively.

6. A rotorcraft rotor according to any one of Claims 1 to 5,
**characterised in that**, the sleeves (3) being individually mounted on the hub (1) by means of respective spherical-abutment members (5), the damper (6) housed in a given sleeve (3) is in articulated engagement on this sleeve (3) by means of a structure (12) for mounting the spherical-abutment member (5) on the hub (1).

7. A rotorcraft rotor according to any one of Claims 1 to 6,
**characterised in that** the lever arm (11) is of rectilinear general shape.

8. A rotorcraft rotor according to any one of Claims 1 to 6,
**characterised in that** the lever arm (11) is of dihedral general shape.

9. A rotorcraft rotor according to any one of Claims 1 to 8,
**characterised in that** the articulation (24) of the damper (6) and the articulation (25) of the linkage (10) on the lever arm (11) are arranged on either side of the articulation (23) of the lever arm (11) on the sleeve (3).

10. A rotorcraft rotor according to any one of Claims 1 to 8,
**characterised in that** the articulation (23) of the lever arm (11) on the sleeve (3) is arranged at one end of the lever arm (11), the articulation (24) of the damper (6) and the articulation (25) of the linkage (10) on the lever arm (11) being arranged at the other end of the lever arm (11).

11. A rotorcraft rotor according to any one of Claims 1 to 8,
**characterised in that** the articulation (25) of the linkage (10) on the lever arm (11) is arranged between the articulation (23) of the lever arm (11) on the sleeve (3) and the articulation (24) of the damper (6) on the lever arm (11).

12. A rotorcraft rotor according to any one of Claims 1 to 11,
**characterised in that** the damper (6) is equally well a cylindrical damper which damps by torsion or an elongate damper which damps by traction/compression.

13. A rotorcraft rotor according to any one of Claims 1 to 12,
**characterised in that**, the damper (6) being an elongate damper which extends within the sleeve (3) in its general direction of extension, either one of its ends which is considered to be distal is articulated to the lever arm (11), the other one of its ends which is considered to be proximal being articulated equally well to the sleeve (3) or to the hub (1).

14. A rotorcraft rotor according to any one of Claims 1 to 13,
**characterised in that** the sleeve (3) is arranged in a casing (19) confining the damper (6) and housing the lever arm (11), said casing (19) comprising, passing through it, a window (22) for one branch of the lever arm (11) to which the linkage (10) is articulated to pass through.

15. A rotorcraft rotor according to any one of Claims 1 to 14,
**characterised in that** the sleeve (3) comprises means for cooling the damper.

16. A rotorcraft rotor according to Claims 13 and 14,
**characterised in that** the casing (19) formed by the sleeve (3) comprises, passing through it, at least one forced-air passage (20) for cooling the damper (6).

17. A rotorcraft rotor according to any one of Claims 15 and 16,
**characterised in that** a body of the damper (6) is provided with a finned heat exchanger (21).

18. A rotorcraft rotor according to any one of Claims 1 to 17,
**characterised in that** said engagement member (7) for engaging the linkage (10) to the hub (1) is an attachment member incorporated equally well in the hub (1) or in a sleeve (3) adjacent to the sleeve (3) which houses the damper (6) engaged with this linkage (10).

19. A rotorcraft rotor according to any one of Claims 1 to 18,
**characterised in that** the linkage (10) comprises at least one transmission element, if not a set of transmission elements which are articulated together.

20. A rotorcraft equipped with a rotor according to any one of Claims 1 to 19.
